(19) Europäisches Patentamt
European Patent Office
Office européen des brevets

(11) **EP 3 782 143 B1**

(12) **EUROPEAN PATENT SPECIFICATION**

(45) Date of publication and mention
of the grant of the patent:
**09.08.2023 Bulletin 2023/32**

(21) Application number: **19787866.3**

(22) Date of filing: **17.04.2019**

(51) International Patent Classification (IPC):
**G06N 3/006** (2023.01)  **G08G 1/01** (2006.01)
**G06N 3/045** (2023.01)  **G06N 3/08** (2023.01)
**G08G 1/052** (2006.01)  **G08G 1/08** (2006.01)

(52) Cooperative Patent Classification (CPC):
**G08G 1/0129; G06N 3/006; G06N 3/045;
G06N 3/08; G08G 1/0112; G08G 1/0116;
G08G 1/0145; G08G 1/052; G08G 1/08**

(86) International application number:
**PCT/CA2019/050477**

(87) International publication number:
**WO 2019/200477 (24.10.2019 Gazette 2019/43)**

(54) **METHOD AND SYSTEM FOR MULTIMODAL DEEP TRAFFIC SIGNAL CONTROL**

VERFAHREN UND SYSTEM ZUR MULTIMODALEN TIEFEN VERKEHRSSIGNALSTEUERUNG

PROCÉDÉ ET SYSTÈME DE COMMANDE DE FEU DE SIGNALISATION APPROFONDIE
MULTIMODALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.04.2018 US 201862660307 P**

(43) Date of publication of application:
**24.02.2021 Bulletin 2021/08**

(73) Proprietor: **The Governing Council of the
University of Toronto
Toronto, Ontario M5G 1L5 (CA)**

(72) Inventors:
• **ABDULHAI, Baher**
**Mississauga, Ontario L5H 4L8 (CA)**
• **SHABESTARY, Soheil**
**Toronto, Ontario M5R 2W8 (CA)**

(74) Representative: **Glawe, Delfs, Moll
Partnerschaft mbB von
Patent- und Rechtsanwälten
Postfach 13 03 91
20103 Hamburg (DE)**

(56) References cited:
**WO-A1-2018/030772   US-A1- 2015 102 945**
**US-A1- 2015 102 945   US-A1- 2016 042 641**
**US-A1- 2016 055 744   US-A1- 2018 096 595**

• XIAOYUAN LIANG ET AL: "Deep Reinforcement
Learning for Traffic Light Control in Vehicular
Networks", ARXIV.ORG, CORNELL UNIVERSITY
LIBRARY, 201 OLIN LIBRARY CORNELL
UNIVERSITY ITHACA, NY 14853, 29 March 2018
(2018-03-29), XP081135944, DOI:
10.1109/TVT.2018.2890726
• BAHER ABDULHAI ET AL: "Reinforcement
Learning for True Adaptive Traffic Signal
Control", JOURNAL OF TRANSPORTATION
ENGINEERING, vol. 129, no. 3, 1 May 2003
(2003-05-01), pages 278-285, XP055645135, DOI:
10.1061/͑ASCE͒0733-947X͑20
0 3͒129:3͑278͒
• X. LIANG et al.: "Deep Reinforcement Learning
for Traffic Light Control in Vehicular Networks",
Cornell University Library, 201 Olin Library
Cornell University Ithaca, 29 March 2018
(2018-03-29), XP081135944, DOI:
10.1109/TVT.2018.2890726
• ABDULHAI B et al.: "Reinforcement Learning for
True Adaptive Traffic Signal Control", Journal of
Transportation Engineering, vol. 129, no. 3, May
2003 (2003-05), pages 278-285, XP055645135,

**Description**

**TECHNICAL FIELD**

The following relates generally to traffic signal control, and more specifically, to a method and system for traffic signal control for an intersection of a traffic network.

**BACKGROUND**

Traffic congestion is a major economic issue, costing some municipalities billions of dollars per year. Various adaptive traffic signal control techniques, as opposed to pre-timed and actuated signal control, have been proposed in an attempt to alleviate this problem.

Some adaptive traffic signal control systems rely on expert adjustments, are selective of data due to resource limitations, or rely heavily on queue length to determine traffic signalling responses. For example, US 2018/0096595 A1 discloses a method that utilized computer vision to analyse the current situation at an intersection to base informed decision according to predefined schemes regarding the switching of traffic signals thereon. Similarly,

US 2016/0055744 A1 utilized position and velocity information transmitted by participating vehicles to a central traffic control server, which will then make informed decision according to predefined schemes on switching traffic signals.

In the article "Deep reinforcement learning for traffic light control in vehicular network", L. Xiaoyuan et al. propose the application of a deep reinforcement learning model in order to optimize the traffic control at an intersection. For this, the intersection is modelled as a chessboard, comprising the roads leading to and away from the actual intersection as well as non-road portions.

**SUMMARY**

It is an object of the present invention, to provide an improved method and system for traffic signal control for an intersection of a traffic network. This object is achieved by a method and a system according to the independent claims.

In an aspect, there is provided a method for traffic signal control for an intersection of a traffic network, the traffic network comprising one or more sensors, the method comprising:

receiving sensor readings from the one or more sensors, the sensor readings comprising a plurality of physical characteristics associated with vehicles approaching the intersection;
discretizing the sensor readings based on a grid of cells projected only onto segments of one or more streets, the segments comprising areas where traffic on such one or more streets approach the intersection; for each of the plurality of physical characteristics, associating, for each of the cells in the grid of cells, a respective value for the cell in the grid of cells representing the physical characteristic associated with each of the vehicles if the vehicles at least partially occupy the cell, otherwise associating a null value for the cell, for each of the plurality of physical characteristics, generating a matrix associated with the physical characteristic comprising a combination of the grid of cells projected onto the one or more streets with the respective values for each cell in the grid of cells; combining each matrix associated with each of the plurality of physical characteristics as separate layers in a multi-layered matrix; determining, using a machine learning model trained with a traffic control training set, one or more traffic actions with the multi-layered matrix as input, the traffic control training set comprising previously determined multi-layered matrices for a plurality of traffic scenarios at the intersection; and communicating the one or more actions to the traffic network.

In a particular case of the method, one of the physical characteristics is speed of the vehicles and another one of the physical characteristics is position of the vehicles.

In another case, one of the physical characteristics is occupancy of the vehicles.

In yet another case, data representing the occupancy of the vehicle is approximated using an average occupancy for each type of vehicle.

In yet another case, at least one of the vehicles is a transit vehicle, and wherein the sensor associated with the occupancy of the vehicle comprises an automated passenger counter associated with the transit vehicle.

In yet another case, the machine learning model comprises a convolutional neural network and reinforcement learning.

In yet another case, the machine learning model comprises Q-learning by iteratively updating a Q-value function, and wherein the determination of the one or more traffic actions is determined as the traffic actions that have the highest Q-values.

In yet another case, the machine learning model is used to optimize a reward function by minimizing cumulative delay of the vehicles approaching the intersection, the reward function comprising cumulative delay at a previous iteration minus cumulative delay at a present iteration.

In yet another case, the cumulative delay is determined as a summation over possible movements of delays over each possible movement of the vehicles in each approach of the intersection.

In yet another case, the vehicles are considered delayed if their speed is below a predetermined speed threshold.

In another aspect, there is provided a system for traffic signal control for an intersection of a traffic network, the traffic network comprising one or more sensors, the system comprising one or more processors and a data storage, the one or more processors configurable to execute: a data extraction module to: receive sensor readings from the one or more sensors, the sensor readings comprising a plurality of physical characteristics associated with vehicles approaching the intersection; discretize the sensor readings based on a grid of cells projected only onto segments of one or more streets, the segments comprising areas where traffic on such_one or more streets approach the intersection; for each of the plurality of physical characteristics, associate, for each of the cells in the grid of cells, a respective value for the cell in the grid of cells representing the physical characteristic associated with each of the vehicles if the vehicles at least partially occupy the cell, otherwise associating a null value for the cell, and, for each of the plurality of physical characteristics, generate a matrix associated with the physical characteristic comprising a combination of the grid of cells projected onto the one or more streets with the respective values for each cell in the grid of cells; a machine learning module to combine each matrix associated with each of the plurality of physical characteristics as separate layers in a multi-layered matrix, and to determine, using a machine learning model trained with a traffic control training set, one or more traffic actions with the multi-layered matrix as input, the traffic control training set comprising previously determined multi-layered matrices for a plurality of traffic scenarios at the intersection; and a controller module to communicate the one or more actions to the traffic network.

In a particular case of the system, one of the physical characteristics is speed of the vehicles and another one of the physical characteristics is position of the vehicles.

In another case, one of the physical characteristics is occupancy of the vehicles.

In yet another case, data representing the occupancy of the vehicle is approximated using an average occupancy for each type of vehicle.

In yet another case, at least one of the vehicles is a transit vehicle, and wherein the sensor associated with the occupancy of the vehicle comprises an automated passenger counter associated with the transit vehicle.

In yet another case, the machine learning model comprises a convolutional neural network and reinforcement learning.

In yet another case, the machine learning model comprises Q-learning by iteratively updating a Q-value function, and wherein the determination of the one or more traffic actions is determined as the traffic actions that have the highest Q-values.

In yet another case, the machine learning model is used to optimize a reward function by minimizing cumulative delay of the vehicles approaching the intersection, the reward function comprising cumulative delay at a previous iteration minus cumulative delay at a present iteration.

In yet another case, the cumulative delay is determined as a summation over possible movements of delays over each possible movement of the vehicles in each approach of the intersection.

In yet another case, the vehicles are considered delayed if their speed is below a predetermined speed threshold.

These and other embodiments are contemplated and described herein. It will be appreciated that the foregoing summary sets out representative aspects of systems and methods to assist skilled readers in understanding the following detailed description.

## BRIEF DESCRIPTION OF THE DRAWINGS

The features of the invention will become more apparent in the following detailed description in which reference is made to the appended drawings wherein:

FIG. 1 is a schematic diagram of a system for traffic signal control for an intersection of a traffic network, in accordance with an embodiment;

FIG. 2 is a schematic diagram showing the system of FIG. 1 and an exemplary operating environment;

FIG. 3 is a flow chart of a method for traffic signal control for an intersection of a traffic network, in accordance with an embodiment;

FIG. 4 is a diagram of a machine learning control arrangement for the system of FIG. 1;

FIG. 5 is a diagram of another machine learning control arrangement for the system of FIG. 1;

FIG. 6 is a diagram of another machine learning control arrangement for the system of FIG. 1;

FIG. 7 is an illustration of an overhead view of an intersection showing exemplary sensor readings of vehicles approaching the intersection;

FIG. 8 illustrates an example of discretization of streets approaching an intersection in a grid-like fashion;

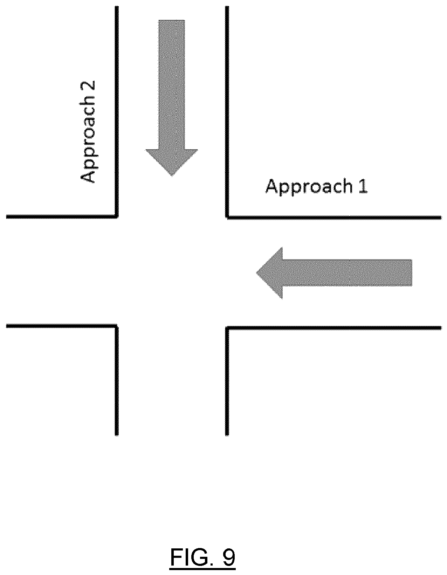

FIG. 9 illustrates an exemplary intersection having two one-way street approaches;

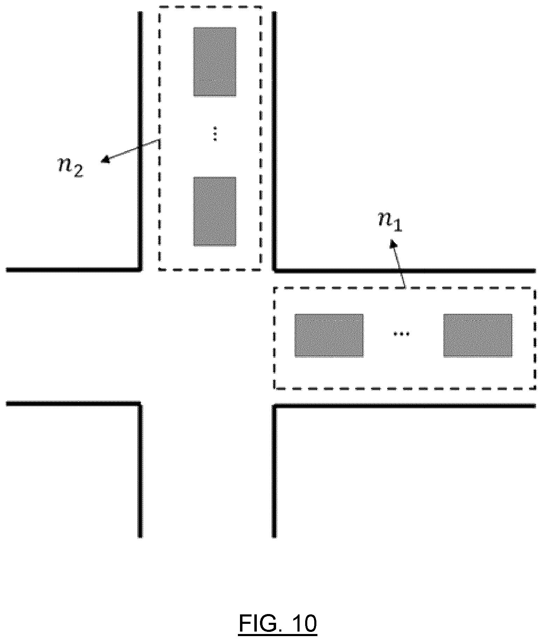

FIG. 10 illustrates sensing people approaching the intersection of FIG. 9;

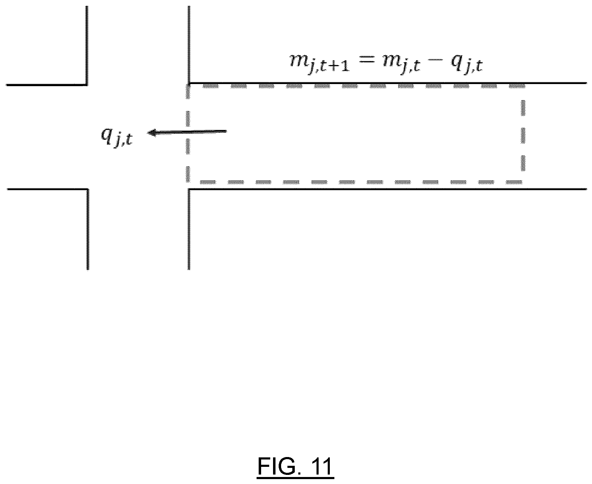

FIG. 11 illustrates a traffic light turning green for one of the approaches of the intersection of FIG. 9; and

FIG. 12 illustrates a diagram of a discretization of a whole of an intersection.

## DETAILED DESCRIPTION

Embodiments will now be described with reference to the figures. For simplicity and clarity of illustration, where considered appropriate, reference numerals may be repeated among the Figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

Various terms used throughout the present description may be read and understood as follows, unless the context indicates otherwise: gendered pronouns include their counterpart pronouns so that pronouns should not be understood as limiting anything described herein to use, implementation, performance, etc. by a single gender; "exemplary" should be understood as "illustrative" or "exemplifying" and not necessarily as "preferred" over other embodiments. Further definitions for terms may be set out herein; these may apply to prior and subsequent instances of those terms, as will be understood from a reading of the present description.

Any module, unit, component, server, computer, terminal, engine or device exemplified herein that executes instructions may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the device or accessible or connectable thereto. Further, unless the context clearly indicates otherwise, any processor or controller set out herein may be implemented as a singular processor or as a plurality of processors. The plurality of processors may be arrayed or distributed, and any processing function referred to herein may be carried out by one or by a plurality of processors, even though a single processor may be exemplified. Any method, application or module herein described may be implemented using computer readable/executable instructions that may be stored or otherwise held by such computer readable media and executed by the one or more processors.

The following relates generally to traffic signal control, and more specifically, to a method and system for traffic signal control for an intersection of a traffic network.

Traffic signal controllers are generally used to maximize and/or optimize the flow of traffic through an intersection that has traffic lights (or other method or device for variable traffic control). Traffic signal controllers are generally designed based on an assumption of a perfect or near-perfect detection of traffic at the intersection. These types of controllers often encounter challenges when applied in the field in real-life applications. In many cases, controllers assess queue length information, typically assuming such information to be seamlessly and flawlessly provided by the cameras. However, in practice, such queue detection can have a limited detection area, inaccurate detection, and weather-related detection problems. In some cases, partial information from upstream cars joining the queues is included in order to provide more information for the traffic signal controllers. Typically, such information needs to be heavily preprocessed, on a case-specific basis; and thus, may require changing the structure of the controller or may be resource intensive.

Traffic signal controllers also typically consider each type of transportation the same for traffic optimization; for example, considering a car to be equivalent to a bus to be equivalent to a motorcycle, and so on. Thus, such controllers consider low occupancy passenger vehicles effectively equivalent to high occupancy transit vehicles. Taking such vehicles as not equivalent is typically problematic; particularly: 1) if such controllers were to give priority for transit, this causes interruption for regular traffic and, in most cases, leads to higher average delays over all the modes; 2) introducing a new mode typically requires expert knowledge to extract useful information for the controller; and 3) typically results in a more complicated state-space for an already high-dimensional state-space of the controller. The embodiments described herein address at least some of the above technical problems using a technological solution of combining deep learning and reinforcement learning methodologies.

The embodiments described herein advantageously work with high-dimensional raw information from sensors, like radars, connected vehicles, or cameras. Advantageously, a structure of a traffic signal controller of the embodiments described herein can be fixed and capable of handling raw information, in various sizes, without pre-processing. The embodiments described herein also advantageously have the ability to optimize travel time at an intersection for both regular vehicular traffic and transit simultaneously. The embodiments described herein also advantageously handle larger input information from the sensors, which for conventional approaches is a problem due to dimensionality and problem size creep.

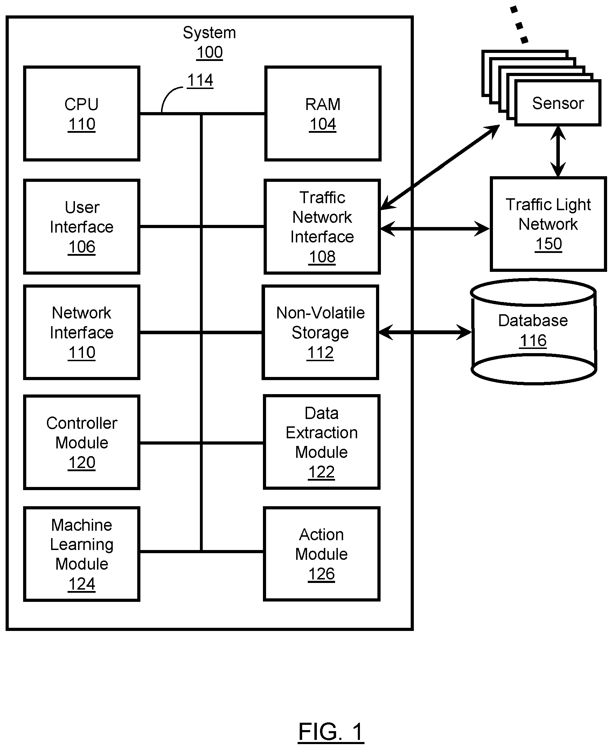

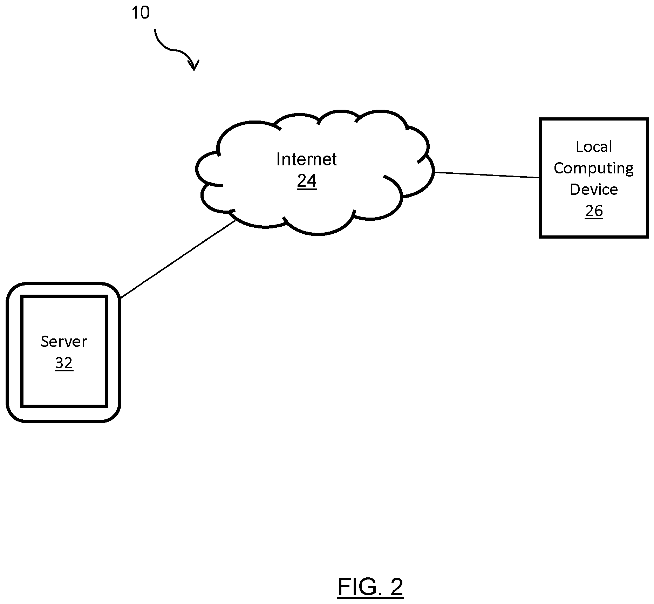

Referring now to FIG. 1, a system 100 for multimodal deep traffic signal control for an intersection of a traffic network, in accordance with an embodiment, is shown. In this embodiment, the system 100 is run on a local computing device (26 in FIG. 2) and accesses content located on a server (32 in FIG. 2) over a network, such as the internet (24 in FIG. 2). In further embodiments, the system 100 can be run on any suitable computing device; for example, a server (32 in FIG. 2).

In some embodiments, the components of the system 100 are stored by and executed on a single computer system. In other embodiments, the components of the system 100 are distributed among two or more computer systems that may be locally or remotely distributed.

FIG. 1 shows various physical and logical components of an embodiment of the system 100. As shown, the system 100 has a number of physical and logical components, including a central processing unit ("CPU") 102 (comprising one or more processors), random access memory ("RAM") 104, a user interface 106, a traffic network interface 108, a network interface 110, non-volatile storage 112, and a local bus 114 enabling CPU 102 to communicate with the other components. CPU 102 executes an operating system, and various modules, as described below in greater detail. RAM 104 provides relatively responsive volatile storage to CPU 102. The user interface 106 enables an administrator or user to provide input via an input device, for example a keyboard and mouse. The user interface 106 can also outputs information to output devices to the user, such as a display and/or speakers. The traffic network interface 108 communicates with a traffic light network 150 and receives sensor readings from the traffic light network, as described herein. The network interface 110 permits communication with other systems, such as other computing devices and servers remotely located from the system 100, such as for a typical cloud-based access model. Non-volatile storage 112 stores the operating system and programs, including computer-executable instructions for implementing the operating system and modules, as well as any data used by these services. Additional stored data, as described below, can be stored in a database 116. During operation of the system 100, the operating system, the modules, and the related data may be retrieved from the non-volatile storage 112 and placed in RAM 104 to facilitate execution.

In an embodiment, the system 100 further includes a controller module 120, a data extraction module 122, a machine learning module 124, and an action module 126, each executed on the one or more processors 110. In some cases, the functions and/or operations of the controller module 120, the data extraction module 122, the machine learning module 124, and the action module 126 can be combined or executed on other modules.

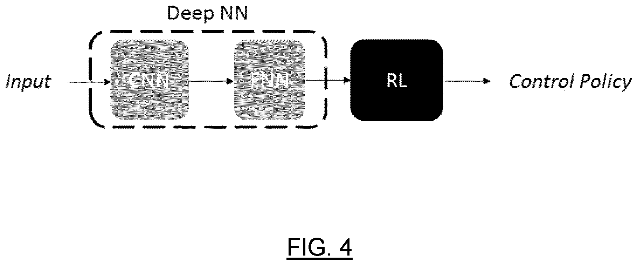

The machine learning module 124 includes one or more machine learning approaches. In an embodiment, the machine learning module 124 includes one or more Convolutional Neural Networks (CNN) for interpreting high dimensional sensory data, one or more Neural Networks (NN), such as a Fully Connected Neural Network (FNN), as function approximators for managing continuous features of the traffic network, and Reinforcement Learning (RL) for learning how to optimize travel time for users of the traffic network. In this embodiment, training for the CNN, NN, and RL is undertaken simultaneously as a whole. In other words, each of these machine learning approaches are not treated nor assigned to fulfill separate goals. The system 100 trains the CNN, NN, and RL, as a unit, to achieve a single goal being optimizing the traffic signal. In a particular case, at instantiation, each of the approaches learns its task without knowing its specific role. In a particular case, as illustrated in FIG. 4, the combination of the CNN and the NN is referred to as a 'Deep Neural Network,' and the three approaches together are referred to as 'Deep Learning.'

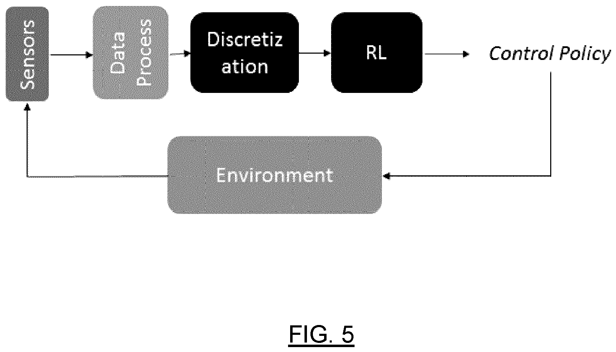

In a particular approach, intelligent traffic signal control can make use of RL to learn an optimal strategy to minimize the travel time for drivers; as illustrated in FIG. 5. RL is a technique suitable for optimal control problems that have highly complicated dynamics. Generally, these control problems are either difficult to model, difficult to control, or both. In RL, the controller, sometimes referred to as an 'agent,' generally does not have any knowledge of the environment where it is applied. At initiation, the agent starts taking random actions, referred to as exploration. For each action, the agent observes the resulting changes in the environment via sensors. The agent also receives a numerical signal, referred to as reward, as an indicator of the success of its actions. In an optimal control scenario, the objective of the agent is to optimize a cumulative reward signal; not merely optimizing each immediate reward it receives.

For problems like traffic signal control, the actions of the agent can affect the future state of the system, so the machine learning module 124 generally must consider the future consequences of the agent's actions, beyond the immediate impact. After some time or a number of exploration iterations, the agent starts learning about the environment and takes fewer random actions; instead, it takes actions that, based on its experience, can lead to better performance. In this embodiment, the machine learning module 124 uses Q-learning, a type of RL approach. Q-learning uses a Q-value function, $Q(s, a)$, as a prediction of an expected cumulative reward received after doing action a while the system is at state s. The goal of the RL agent is to learn this function and to take actions that maximize expected cumulative reward received in the future. At the beginning, the values of the Q-value function are initialized with zeros, or random numbers. In this approach, the Q-value function is updated using the following approach (where $Q^k$ is the estimate of Q at time step $k$):

*Initialise $Q^0(s, a), S°$*

*Choose $a^0$ at $s^0$ using policy derived from Q - value*

*Repeat for each time step:*

*Take action $a^k$, observe $r^k$, $s^{k+1}$*

$$Q^k(s^k, a^k) \;=\; Q^{k-1}(s^k, a^k) \;+\; \alpha \left[ r^k \;+\; \gamma \, max_a \, Q^{k-1}(s^{k+1}, a^{k+1}) \;-\; Q^{k-1}(s^k, a^k) \right]$$

*Choose $a^{k+1}$ at $s^{k+1}$ using policy derived from Q - values, with some exploration*

*$s^k = s^{k+1}$ ; $a^k = a^{k+1}$*

Generally, RL is best suited for discrete environments and work in tabular format. Due to these characteristics, RL generally only works on a system that has small state-space. With each extra feature in state-space, the size of the Q-table grows exponentially, which can lead to what is referred to as a curse of dimensionality. In addition, to apply RL to continuous-space problems, the state values generally must be discretized; which generally requires an expert's knowledge of the problem. Another issue with discretization is that if the discretization is too rough, then the agent may not perform properly because it cannot sense the changes in the state. While if the discretization is too fine, the dimensionality of the Q-tables increases and problems with dimensionality will generally arise. Additionally, since the agent learns the value of each state-action separately, it has limited generalization capabilities, and it does not have the ability to perform well when faced with unvisited states (empty or inadequately learned cells in the Q matrix). Furthermore, as the size of the Q-table increases, the training time increases because the agent has to visit each state-action pair enough times to gain meaningful experience.

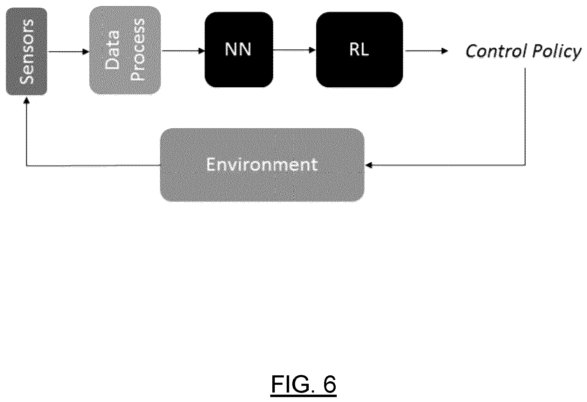

In the system 100, to address at least the above, a Neural Network (NN) is included to work as function approximator beside the RL algorithm; as illustrated in FIG. 6. In particular cases, NN and RL combined can have stability issues. Both NN and RL are trained based on sampled data. NN generally needs to be fed non-correlated inputs to converge, while in RL, each input data is correlated to its previous and next data samples ($s^{k-1}$, $s^k, s^{k+1}$). Also, in RL, a general goal is to minimize a temporal difference (TD) of the Q-values, given:

$$TD \;=\; Q^k(s^k, a^k) \;-\; \left[ r^k \;+\; \gamma \, Q^{k-1}(s^{k+1}, a^{k+1}) \right]$$

where $s^k$ is the state of the traffic environment, described by the sensory information; $a^k$ is the action of the controller, with indicates the phase that will turn green in the next time step (if $a^k = a^{k-1}$, then the current green phase extends); and $r^k$ is the reward value that the controller receives reduction in the cumulative delay, right after applying $a^k$ to the environment. Consequently, after applying action $a^k$, the state of the intersection changes to a new state $s^{k+1}$. The entire sequence of ($s^k$, $a^k$, $r^k$, $s^{k+1}$) is one full interaction of the system 100 with the traffic environment. In particular cases, training data comprises many (for example, thousands) of such sequences, which the system 100 uses to update its mapping from states to optimal actions (for example, via the Q-function). In some cases, the training sequences can be observed directly in real-life scenarios (i.e., in the field). In other cases, the training sequences can be observed in a simulation environment (virtual replica of the real intersection). In some cases, it may be more appropriate to train the model to maturity in a safe simulated environment, then deploy the system 100 in the field. In some cases, the model can continue to be trained and refined in the field as new data is observed.

Minimizing the TD, in terms of NN, means that target for the NN is $r^k + y\, Q^{k-1}(s^{k+1}, a^{k+1})$. Thus, a target of the NN is itself a function of the NN's output, and with each update it is changing. This changing target can create instability issues for the NN training. In order to address this issue, the present embodiment incorporates two techniques: Experience Replay Memory and periodic update of the target network. In Experience Replay Memory, the agent stores its interaction with the environment, and later takes random samples from the replay memory and trains on them. In this way, input samples are neither sequential nor correlated. In the periodic update of the target network, there are two networks defined as Q-value approximators, $Q(s, a)$ and $Q_{target}(s, a)$. Although $Q(s, a)$ is being updated at each iteration, $Q_{target}(s, a)$ is kept unchanged for some period, referred to as a target update period. The new TD is given as:

$$TD \;=\; Q(s^k, a^k) \;-\; [r^k + \gamma\, Q_{target}(s^{k+1}, a^{k+1})]$$

The $Q_{target}(s, a)$ target network gets updated by the machine learning module 124 periodically with much lower rate than the $Q(s, a)$ network. With this technique, the target for the NN ($r^k + \gamma\, Q_{target}(s^{k+1}, a^{k+1})$) is not changing as frequently, and therefore, the training is more stable. In some cases, the machine learning module 124 updates the $Q_{target}(s, a)$ target network by replacing the old $Q_{target}(s, a)$ target network with the most recent $Q(s, a)$ network:

$$Q_{target}^{k}(s, a) = Q^{k}(s, a);$$

*every C iteration*

where C is the target update period.

Although NNs provide more flexibility when combined with RL, generally there may be some issues that restrict their applications. Generally, such approaches may require pre-processing to collect information from sensors (i.e., extracted features) and combine such information such that it is compact and easy-to-understand for the agent. This pre-processing is generally necessary because NNs with RL do not handle very large sized inputs well, and as such, they can be prone to overfitting. This pre-processing is generally directly designed by an expert; such as in the present case, someone who is knowledgeable in both transportation and control aspects. Furthermore, where there is modification to the system (for example, adding transit or upstream flow information as described herein), the pre-processing may need to be redesigned, and there would likely be an increase the size of the state-space.

Generally, the most commonly used measure for the state of a traffic signal control problem is the queue length on each street approaching a traffic intersection. However, there may be limitations to using this measure because it generally ignores moving vehicles approaching the end of the queue. Additionally, there is generally no standard definition of what constitutes the queue; for example, a speed threshold based on which vehicles are considered to be moving or in the queue, or conditions on the vehicles which were in the queue and now are moving but have not yet cleared the intersection.

In an embodiment, the system 100 makes use of advancements in sensors as a data source to solve the technical problems in traffic control; for example, using radar sensors, high-fidelity computer vision, and connected vehicles. Using data from such sensors, the system 100 can extract more detailed information to achieve better performance in the traffic network.

Advantageously, the data extraction module 122 is able to receive raw high-dimensional sensory input data without expertise and have the machine learning module 124 extract useful features from the data directly. In an embodiment, the machine learning module 124 uses a specific type of NN called a Convolutional NN (CNN). Such NNs are often used in other disparate fields of art, particularly in image processing applications. CNNs advantageously have the ability to extract useful information from large inputs like images.

In a particular case, a basic unit of CNNs are referred to as convolutional filters. Convolutional filters are small regions that are used to examine a small part of the input (for example, one or more pixels of an image) and then swipe across the whole of the input. In a particular case, filters in first layers extract basic information (for example, sudden changes in colour in small parts of the input), while as more layers are added, more complicated concepts are detected (for example, shapes, faces, and patterns). In general, each filter swiped across the input produces an output the same size as the input. However, the machine learning module 124 can reduce the size of the output by techniques like striding or pooling. For example, by moving the filter one pixel to the right, the new part of the input that the filter is processing now has changed only slightly compared to the last step; thus, in striding, the machine learning module 124 lets the filter skip some pixels while swiping the input. If the machine learning module 124 skips only one pixel at a time, it will reduce the size of the output to a quarter of the size. Thus, in each layer, the size of the input can be decreased by the factor of 4, without generally losing useful information.

Given that CNNs are generally specialized for image processing, the present inventors recognized the advantages of reconfiguring traffic sensor input data to a form that resembles the structure of an image. The data extraction module 122 configures the traffic sensor data to be in a form of a matrix, where each cell of the matrix has a value such that the machine learning module 124 is able to exploit the CNNs. In an embodiment, the traffic sensor data is received from the traffic light network 150, the traffic sensor data comprising data received from any high fidelity sensory source; for example, one or more traffic cameras, one or more radars (for example, Smartmicro™ radar sensors), or from one or more connected vehicles communicating their location and speed to the traffic light network 150. The connected vehicles can passes such data to the traffic network interface 108, or directly to the traffic network interface 108, via, for example, Dedicated Short Range Communication (DSRC) or the like. With either type of sensor, the system 100 has access to the location and speed of each vehicle on each street approaching the intersection.

In order to present the traffic sensor data in a form similar to an image for the CNN, the data extraction module 122 can 'pixelate' the surface of the street into smaller partitions or cells. In an embodiment, each partition *is d* meters long with a width equivalent to one lane of the street. In some cases, a reasonable value for *d* can be an average length of vehicles; if *d* is too large the state space becomes too aggregate, and precision of information can be lost. On the other hand, a smaller *d* may lead to unnecessary large state space without providing more information. Accordingly, each cell covers a segment of the street approaching the intersection. In the present embodiment, if there is a vehicle on the street, the data extraction module 122 contributes a '1' to a specific cell corresponding to the partition of the street occupied by the vehicle; otherwise the data extraction module 122 contributes a '0'. In this way, the data extraction module 122 allots a matrix with Whole Numbers ($\{0 \text{ u } N\}$) for each street approaching the intersection. By putting together these matrices for all the streets approaching the intersection, an image-like representation is produced of the position of vehicles approaching the intersection. In an embodiment, the data extraction module 122 also generates a matrix for the speed of the vehicles approaching the intersection. However, instead of the data extraction module 122 allotting the cells with a 1 in the presence of a vehicle, the data extraction module 122 allots the cell associated with the vehicles with a value representing the average speed of the vehicles. Accordingly, the data extraction module 122 generates two matrices of the same size. The data extraction module 122 combines the two matrices to generate a single 2-layer image, which can then be provided to the CNN implemented by the machine learning module 124. Advantageously, combining the matrices allows for greater computing resource management by not having to run each matrix through a CNN separately. Additionally, having a combined matrix examined by the CNN can be more powerful because it allows the system 100 to capture correlations between the position matrix and the speed matrix.

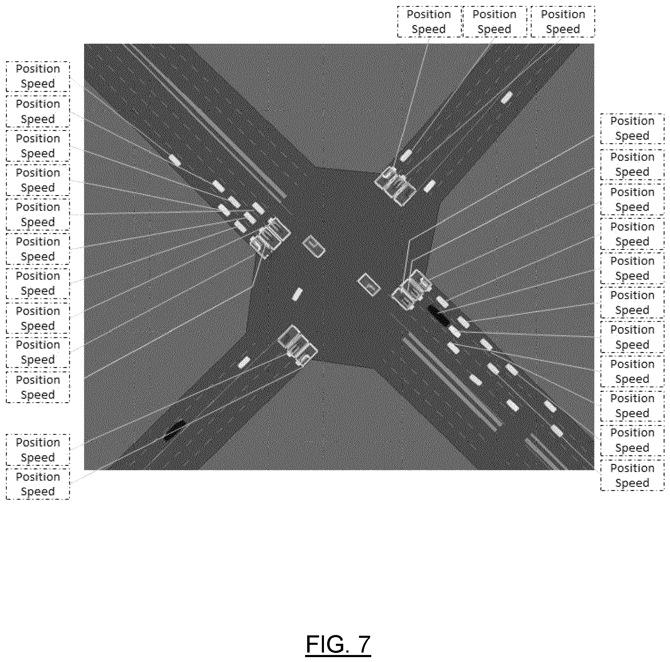

FIG. 7 illustrates exemplary sensor readings of vehicles approaching an intersection to determine their speed and position for provision to the system 100.

In an embodiment of the system 100, the data extraction module 122 also generates a matrix for the occupancy (or amount of people) associated with each of the vehicles approaching the intersection. Thus, the data extraction module 122 allotting the cells with a number representing the number of people travelling in each vehicle. In this embodiment, the traffic network interface 108 receives data representing the occupancy of each vehicle from, for example, connected vehicles having weight sensors to determine the occupancy of the vehicle, transit vehicles having records of the amount of people who have paid to ride the vehicle (for example, Automatic Passenger Count Units), ride-hailing apps associated with a vehicle that have data representing the number of paying occupants, infrared sensors at the intersection that are configured to recognize people, or the like. Advantageously, this allows the system 100 to optimize travel time through the intersection on a per-person basis, rather than merely on a per-vehicle basis. Thus, allowing approximately the greatest amount of people to flow through the intersection in a most efficient fashion. In yet further embodiments, the system 100 is capable of processing even higher dimensional sensory inputs from respective sensors without necessitating modification to its structure, merely by adding additional matrix layers; for example, taking into account a destination of the vehicles approaching the intersection to identify which vehicles are turning left, turning right, or proceeding straight.

In addition to the position and speed of the vehicles, in some cases it may be useful for the system 100 to know the current green phase and the duration that the current phase has been green (referred to as elapsed time). These two values, with the output of the CNN, can be concatenated to a feedforward neural network (FNN), which can be a part of the machine learning module 124.

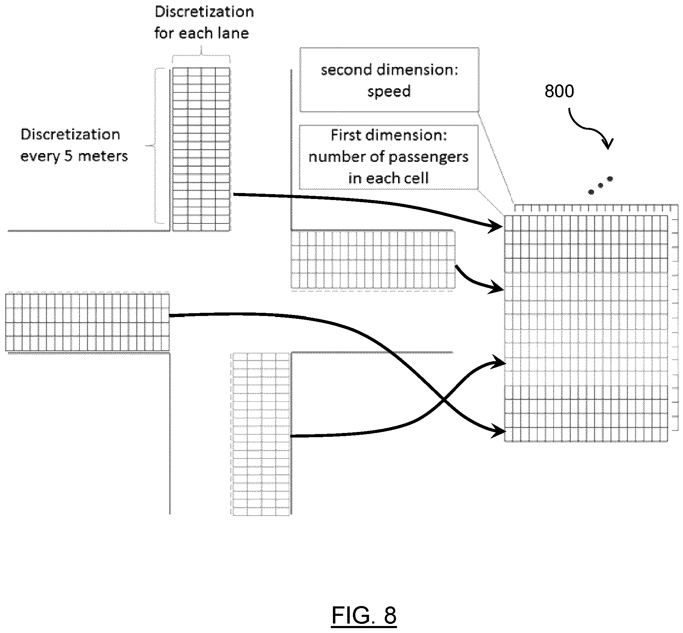

FIG. 8 illustrates an example of discretization of streets approaching an intersection in a grid-like fashion by the data extraction module 122. The data extraction module 122 combines each of the cells of the grids into a multi-layered matrix 800. As described herein, this multi-layered matrix 800 can comprise two, three, or more layers. In the example of FIG. 8, a first layer matrix has the aggregate occupancy of vehicles in each cell and a second layer matrix has the average speed of vehicles in each cell. In the example of FIG. 8, the discretization of the street occurs at a length of every d metres (for example, 5 metres).

Generally, there are two major issues when defining a reward function for traffic signal control. Firstly, although a goal for control is to minimize the total travel time for all vehicles, it is generally desirable to not impose unacceptable delays to streets with lower traffic in order to achieve this goal. Secondly, perfect information on which to base the traffic control generally does not exist. Detection can thus become a nemesis of traffic control, regardless of the sophistication of its logic.

An exemplary technical problem addressed by the system 100 is to reduce the traffic signal delay or the travel time for vehicles, or in some embodiments people, approaching the intersection. In order to do that, the machine learning module 124 can develop and use a reward function that the present inventors have determined can be used to overcome the technical problem.

As described herein, whenever a vehicle enters an intersection approach (i.e. entering a street block leading to the intersection), that vehicle is monitored in the environment to log its speed and delay. So, at each time step, the system 100 can compile a list of the all the vehicles in the intersection ($VL^t$ = {$u$|*vehicle u is in the intersection at time step t*}) with their speeds $sp_u^t$ and delays $d_u^t$. The vehicles in the intersection can be separated based on their movement ($VL^t = \bigcup_{m \in M} VL_m^t$), with $M$ indicating the set of possible movements at the intersection. In an ordinary intersection, $M$ = {$N, NL, S, SL, W, WL, E, EL$}. N, S, W, and E represent Northbound, Southbound, Westbound, and Eastbound, respectively; and L represents left turn movements. The system 100 can determine a cumulative delay of the intersection at time step $t$ ($CD^t$) as:

$$CD^t = \sum_{u \in VL^t} d_u^t = \sum_{m \in M} \sum_{u \in VL_m^t} d_u^t = \sum_{m \in M} CD_m^t,$$

where $CD_m^t$ is the cumulative delay of the movement $m$ at time step $t$.

The system 100 can then determine the delay of each vehicle ($d_u^t$). In an embodiment, a vehicle is considered to be delayed when it is in the queue; in other words, when it is delayed because of the traffic signal. Accordingly, a variable, $inq_u^t$, is used to indicate if a vehicle is in the queue or not at time step t. In this embodiment, a vehicle is considered to be in the queue only if its speed ($sp_u^t$) is below a predefined queue speed threshold ($sp_q$).

$$inq_u^t = \begin{cases} 1, & if \ sp_u^t < sp_q \\ 0, & o.w. \end{cases}$$

Accordingly:

$$d_u^t = d_u^{t-1} + inq_u^t \ ; \ d_u^0 = 0 \ \ \forall \ u \in VL^t$$

Thus, cumulative delay ($CD^t$) can be determined as a summation of the individual vehicle delays ($d_u^t$). In an embodiment, if there is a stationary vehicle (with speed below the threshold), that vehicle increases the cumulative delay, and if a vehicles exits the intersection, its entire delay is removed from the summation of the cumulative delay. In this embodiment, when a vehicle passes the stop bar and leaves the intersection, it is no longer considered in the set of the vehicles in the intersection ($VL^t$). Hence, there is a sudden decrease in the cumulative delay of the movement and the intersection by the amount of that vehicle's delay.

For the embodiment where occupancy of the vehicles is considered, $inq_u^t$ becomes:

$$inq_u^t = \begin{cases} o_u^t, & if \ sp_u^t < sp_q \\ 0, & o.w. \end{cases}$$

where ou is the occupancy of the vehicle.

For the embodiment where information of transit vehicles is considered, $inq_u^t$ becomes:

$$inq_u^t = \begin{cases} o_u^t, & if\ sp_u^t < sp_q\ and\ transit\ vehcile\ u\ is\ not\ boarding/alighting \\ 0, & o.w. \end{cases}$$

In some cases, the transit can be excluded from consideration when determining the delays when the transit vehicle is at the stop boarding and alighting, because the traffic control should not be penalized for delays not caused by its actions.

In an embodiment, the machine learning module 124 strives to maximize the reduction in the cumulative delay of the intersection ($CD_t$), and the reward function becomes:

$$r^k = CD^{k-1} - CD^k$$

In some cases, the delay of the individual vehicles can be extracted from in-vehicle sensors and vehicle-2-infrasructure communication. In other cases, the delay of each approach can be approximated without having access to the actual delay of the vehicles. For such approximation, the queue lengths ($q_m^t$) can be used; based on how many cells of the matrix are occupied with slow vehicles, and the output flows of the intersection ($O_m^t$).

For the approximation, an auxiliary variable $z_m^t$, $m \in M$ can be used that represents the vehicles contributing to the cumulative delay (CD) of a movement. In this case, m is the index of the movement and t is the time step.

$$z_m^t = \begin{cases} q_m^t, & if\ the\ signal\ is\ red\ for\ movement\ m\ at\ time\ step\ t \\ z_m^{t-1} - O_m^t, & if\ the\ signal\ is\ green\ for\ movement\ m\ at\ time\ step\ t \end{cases}$$

In this case, the system 100 tracks the number of vehicles in the queue when the traffic light is red. In this way, the delay of movement can be thought of as building up because of these vehicles in the queue. When the signal turns green, the system 100 can focus on the vehicles that were in the queue during the red-light time and assume that the delay of the movement is divided among them equally. If $O_m^t$ vehicles in the movement exit the intersection, it means that now there are still $z_m^{t-1} - O_m^t$ vehicles that have been delayed during the red signal. Consequently, the delay of the approach drops with the proportion of the vehicles left in the intersection to all the vehicles initially contributing to the movement delay. Hence, when one of the vehicles leaves the intersection, the delay of the movement $CD_m^t$ decreases by $\dfrac{O_m^t}{z_m^{t-1}}$.

$$\widehat{CD_m^t} = \begin{cases} \widehat{CD_m^{t-1}} + q_m^t, & if\ the\ signal\ is\ red\ for\ movement\ m\ at\ time\ step\ t \\ \left(1 - \dfrac{O_m^t}{z_m^{t-1}}\right) . CD_m^{t-1} & if\ the\ signal\ is\ green\ for\ movement\ m\ at\ time\ step\ t \end{cases}$$

Thus, the above determination can be used by the machine learning module 124 to approximate a delay of each movement.

In an exemplary embodiment for vehicular traffic flow a typical 4-way intersection, the action module 126 can have eight possible actions, each representing one possible phase of the traffic signal. If the movement of traffic is categorized into: Northbound, Northbound Left-turn, Southbound, Southbound Left-turn, Eastbound, Eastbound Left-turn, Westbound, Westbound Left-turn (N, NL, S, SL, E, EL, W, WL), then each phase is a set that includes two of non-conflicting movements. The Action space, or the phase set, is A = {(NL, SL), (N, NL), (S, SL), (N, S), (EL, WL), (E, EL), (W, WL), (E, W)}. The action module 126 can choose an action at certain points-in-time. These points in time should capture the real-world constraints of yellow, all-red, and minimum green times, during which the traffic signal is not expected to change. In an example, the current phase (the phase that the signal is green for) can be (N, S) and, at the current moment, the action module 126 must select an action. If the action that the action module 126 selects is (N, S), it means to extend the current green signal by $\Delta t$ second, then the next decision point-in-time will be $\Delta t$ seconds later;

for example, $\Delta t$ can be equal to 1. However, if the action module 126 selects any action other than (N, S), then the traffic signal has to go through 3 periods of yellow, all-red, and minimum green times of the next phase, before the action module 126 can select another action. During this period the action module 126 is on hold and not allowed to select actions.

When electing an action, the controller module 126 examines the state of the traffic signals for the intersection, and the machine learning module 124 determines the Q-values for all eight possible actions (for this example). The machine learning module 124 selects the action that has highest Q-values (highest expected future reward) and instructs the action module 126 to apply the selected action by communicating it to the traffic light network 150 via the traffic network interface 108.

The present inventors experimentally evaluated the system 100 using partial information (different penetration rates) using data received from connected vehicles, and with different discretization lengths. Simulations were undertaken that showed that the system 100 outperforms conventional intelligent traffic signal controllers, including those using RL approaches with neural networks (NNs) as a function approximator that uses queue length as the state space, with penetration rates as low as 40% and with discretization lengths as large as 50 meters.

An experiment was run assuming data was received from connected vehicles. In this case, an important factor is the penetration rate. The present inventors tested the performance of the system 100 for different penetration rates of connected vehicles. Accordingly, if the penetration rate is X%, the system 100 only receives information from X random cars in every 100 cars. The present inventors' simulations show that if the penetration rate is as low as 40%, then the system 100 works as well or better than other approaches. In another experiment, different discretization lengths were tested up to 100 meters, and up to 50 meters the deteriorations were not significant.

Advantageously, the system 100 was capable of processing extra information including, transit and vehicles approaching the upstream end of the queue, without necessitating structural changes or experts' knowledge. The system 100 outperformed the-state-of-the-practice transit signal priority systems in different scenarios, including low-frequency, high-frequency, high-occupancy, low-occupancy, low penetration of CVs, and opposing transit lines with high margins of 40%.

Advantageously, the system 100 described herein provides self-learning traffic signal control that learns optimal control policy from direct interaction with the environment of the traffic light network. In other cases, applying an untrained agent to a real traffic signal is not practical. Accordingly, the system 100 can be trained using traffic micro-simulation software; for example, Quadstone™ Paramics. Using traffic micro-simulation software allows the system 100 to train in a safe simulation environment that can be very close to those found in real-world applications.

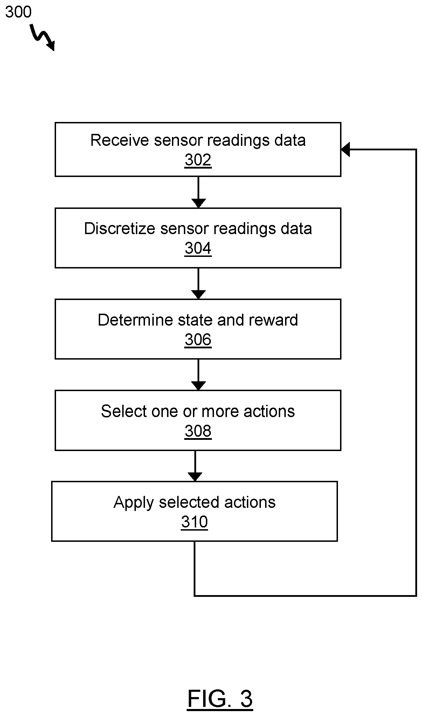

FIG. 3 illustrates a method 300 for multimodal deep traffic signal control for an intersection of a traffic network, in accordance with an embodiment. At block 302, the data extraction module 122 receives sensor readings data from the traffic light network 150 via the traffic network interface 108. The sensor readings data comprising a first physical characteristic and a second physical characteristic for vehicles approaching the intersection. In various embodiments, the first or second physical characteristic each can be one of speed of a vehicle, position of the vehicle, or occupancy of the vehicle. At block 304, the data extraction module 122 discretizes the data into the grid pattern described herein. The data extraction module 122 associates a first value for each cell representing the first physical characteristic of each vehicle if such vehicle at least partially occupies such cell, otherwise associating a null value for the cell, generating a first matrix comprising the first values for each cell. The data extraction module 122 also associates a second value for each cell representing the second physical characteristic of each vehicle if such vehicle at least partially occupies such cell, otherwise associating a null value for the cell, generating a second matrix comprising the second values.

At block 306, the machine learning module 124 combines the first matrix and the second matrix as separate layers in a multi-layered matrix and determines a state and a reward using the machine learning techniques described herein.

At block 308, the controller module 120 uses the determined state and reward to evaluate and select one or more actions, and update its parameters accordingly, in order to optimize an objective function, as described herein. At block 310, the action module 126 applies the selected actions by the controller module 120 by outputting the action to the traffic light network 150 via the traffic network interface 108. The method 300 can be repeated on a periodic basis to account for changes to the position, speed, and occupancy of vehicles approaching the intersection over time; for example repeated every second.

Accordingly, embodiments of the present disclosure advantageously provide intelligent traffic signal control that can concurrently consider both vehicular traffic and occupancy of such traffic to minimize the total travel time of all people approaching an intersection. In a particular case, the system 100 gives priority to people regardless of the mode or type of vehicle in which they travel. In this way, the system 100 is able to directly extract useful information from raw traffic input data and approximate a cumulative delay of each movement in order to make proper actions (serving selected movements). The decisions can be revisited after a certain period, for example, every second. The system 100 can learn to map traffic states to an optimal action via direct interaction with such traffic.

Advantageously, embodiments of the present disclosure are able to consider the travel times of the number of people taking a transit vehicle, along with considering travel times of people taking private transportation. The relative importance of each transit vehicle is determined by considering its on-board number of passengers. Modern transit vehicles record the number of passengers on board via, for example, Automatic Passenger Count Units. In this way, the embodiments of the present disclosure are able to handle occupancy information and optimize occupant travel time for each vehicle, rather than merely optimizing vehicle travel time. Additionally, if the occupant information is not available, the system 100 can advantageously predict the amount of people on a vehicle using the average occupancy of a type of vehicle (or with other factors, such as time of day) received from historical data. Otherwise, the system 100 can also optimize traffic on a per-vehicle basis if sufficient occupancy data is not available, as described herein.

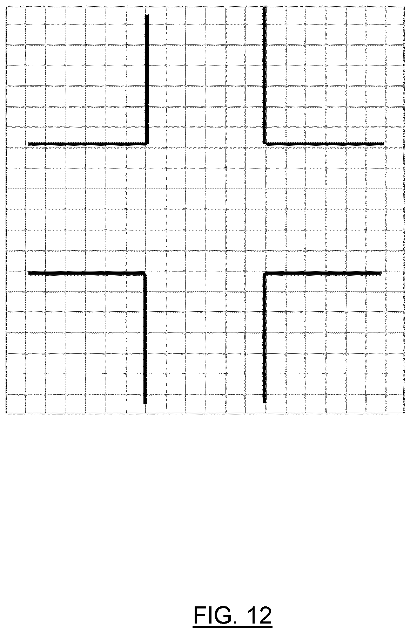

Advantageously, embodiments of the present disclosure are able to discretise only the street approaches of the intersection, as illustrated in FIG. 8 Other approaches, as exemplified in the diagram of FIG. 12, discretize the whole of the intersection. Thus, the present embodiments provide a significant computational and sensor savings by not having to consider the extraneous areas of the intersection, such as those considered by the other approaches.

Although the invention has been described with reference to certain specific embodiments, the scope of protection of the invention is to be determined by the claims appended hereto.

**Claims**

1. A method (300) for traffic signal control for an intersection of a traffic network (150), the traffic network (150) comprising one or more sensors, the method (300) comprising:

   receiving (302) sensor readings from the one or more sensors, the sensor readings comprising a plurality of physical characteristics associated with vehicles approaching the intersection;
   discretizing (304) the sensor readings based on a grid of cells projected only onto segments of one or more streets, the segments comprising areas where traffic on such one or more streets approach the intersection;
   for each of the plurality of physical characteristics, associating (306), for each of the cells in the grid of cells, a respective value for the cell in the grid of cells representing the physical characteristic associated with each of the vehicles if the vehicles at least partially occupy the cell, otherwise associating a null value for the cell;
   for each of the plurality of physical characteristics, generating a matrix associated with the physical characteristic comprising a combination of the grid of cells projected onto the one or more streets with the respective values for each cell in the grid of cells;
   combining (306) each matrix associated with each of the plurality of physical characteristics as separate layers in a multi-layered matrix;
   determining (308), using a machine learning model trained with a traffic control training set, one or more traffic actions with the multi-layered matrix as input, the traffic control training set comprising previously determined multi-layered matrices for a plurality of traffic scenarios at the intersection; and
   communicating (310) the one or more actions to the traffic network.

2. The method of claim 1, wherein one of the physical characteristics is speed of the vehicles and another one of the physical characteristics is position of the vehicles.

3. The method of claim 1, wherein one of the physical characteristics is occupancy of the vehicles.

4. The method of claim 3, wherein data representing the occupancy of the vehicle is approximated using an average occupancy for each type of vehicle.

5. The method of claim 3, wherein at least one of the vehicles is a transit vehicle, and wherein the sensor associated with the occupancy of the vehicle comprises an automated passenger counter associated with the transit vehicle.

6. The method of claim 1, wherein the machine learning model comprises a convolutional neural network and reinforcement learning and wherein the machine learning model comprises Q-learning by iteratively updating a Q-value function, and wherein the determination of the one or more traffic actions is determined as the traffic actions that have the highest Q-values.

7. The method of claim 6, wherein the machine learning model is used to optimize a reward function by minimizing cumulative delay of the vehicles approaching the intersection, the reward function comprising cumulative delay at a previous iteration minus cumulative delay at a present iteration.

8. The method of claim 7, wherein the cumulative delay is determined as a summation of delays over each possible movement of the vehicles in each approach of the intersection.

9. A system (100) for traffic signal control for an intersection of a traffic network (150), the traffic network (150) comprising one or more sensors, the system (100) comprising one or more processors (110) and a data storage (104, 112, 116), the one or more processors (110) configurable to execute:

a data extraction module (122) to:

receive sensor readings from the one or more sensors, the sensor readings comprising a plurality of physical characteristics associated with vehicles approaching the intersection;
discretize the sensor readings based on a grid of cells projected only onto segments of one or more streets, the segments comprising areas where traffic on such one or more streets approach the intersection;
for each of the plurality of physical characteristics, associate, for each of the cells in the grid of cells, a respective value for the cell in the grid of cells representing the physical characteristic associated with each of the vehicles if the vehicles at least partially occupy the cell, otherwise associating a null value for the cell; and
for each of the plurality of physical characteristics, generate a matrix associated with the physical characteristic comprising a combination of the grid of cells projected onto the one or more streets with the respective values for each cell in the grid of cells;

a machine learning module (124) to combine each matrix associated with each of the plurality of physical characteristics as separate layers in a multi-layered matrix, and to determine, using a machine learning model trained with a traffic control training set, one or more traffic actions with the multi-layered matrix as input, the traffic control training set comprising previously determined multi-layered matrices for a plurality of traffic scenarios at the intersection; and
a controller module (120) to communicate the one or more actions to the traffic network.

10. The system of claim 9, wherein one of the physical characteristics is speed of the vehicles, another one of the physical characteristics is position of the vehicles, and another one of the physical characteristics is occupancy of the vehicles.

11. The system of claim 10, wherein data representing the occupancy of the vehicle is approximated using an average occupancy for each type of vehicle.

12. The system of claim 10, wherein at least one of the vehicles is a transit vehicle, and wherein the sensor associated with the occupancy of the vehicle comprises an automated passenger counter associated with the transit vehicle.

13. The system of claim 9, wherein the machine learning model comprises a convolutional neural network and reinforcement learning and wherein the machine learning model comprises Q-learning by iteratively updating a Q-value function, and wherein the determination of the one or more traffic actions is determined as the traffic actions that have the highest Q-values.

14. The system of claim 13, wherein the machine learning model is used to optimize a reward function by minimizing cumulative delay of the vehicles approaching the intersection, the reward function comprising cumulative delay at a previous iteration minus cumulative delay at a present iteration.

15. The system of claim 14, wherein the cumulative delay is determined as a summation over possible movements of delays over each possible movement of the vehicles in each approach of the intersection.

**Patentansprüche**

1. Verfahren (300) zur Verkehrssignalsteuerung für eine Kreuzung eines Verkehrsnetzes (150), wobei das Verkehrsnetz (150) einen oder mehrere Sensoren umfasst, wobei das Verfahren (300) Folgendes umfasst:

Empfangen (302) von Sensormesswerten von dem einen oder den mehreren Sensoren, wobei die Sensormesswerte eine Vielzahl physischer Eigenschaften, die mit sich der Kreuzung nähernden Fahrzeugen assoziiert sind, umfassen;

Diskretisieren (304) der Sensormesswerte basierend auf einem Gitter von nur auf Abschnitte einer oder mehrerer Straßen projizierten Zellen, wobei die Abschnitte Bereiche, in denen sich Verkehr auf einer solchen oder solchen mehreren Straßen der Kreuzung nähert, umfassen;

für jede der Vielzahl physischer Eigenschaften Assoziieren (306), für jede der Zellen in dem Gitter von Zellen, eines jeweiligen Werts für die Zelle in dem Gitter von Zellen, der die physische Eigenschaft repräsentiert, die mit jedem der Fahrzeuge assoziiert ist, wenn die Fahrzeuge die Zelle mindestens zum Teil belegen, sonst Assoziieren eines Nullwerts für die Zelle;

für jede der Vielzahl physischer Eigenschaften Generieren einer Matrix, die mit der physischen Eigenschaft assoziiert ist, umfassend eine Kombination des Gitters von auf die eine oder die mehreren Straßen projizierten Zellen mit den jeweiligen Werten für jede Zelle in dem Gitter von Zellen;

Kombinieren (306) jeder Matrix, die mit jeder der Vielzahl physischer Eigenschaften assoziiert ist, als separate Schichten in einer mehrschichtigen Matrix;

Bestimmen (308) einer oder mehrerer Verkehrsaktionen mit der mehrschichtigen Matrix als Eingabe unter Nutzung eines mit einem Verkehrssteuerungstrainingsdatensatz trainierten Maschinenlernmodells, wobei der Verkehrssteuerungstrainingsdatensatz zuvor bestimmte mehrschichtige Matrizen für eine Vielzahl von Verkehrsszenarien an der Kreuzung umfasst; und

Kommunizieren (310) der einen oder der mehreren Aktionen an das Verkehrsnetz.

2. Verfahren nach Anspruch 1, wobei eine der physischen Eigenschaften die Geschwindigkeit der Fahrzeuge und eine andere der physischen Eigenschaften die Position der Fahrzeuge ist.

3. Verfahren nach Anspruch 1, wobei eine der physischen Eigenschaften die Besetzung der Fahrzeuge ist.

4. Verfahren nach Anspruch 3, wobei Daten, die die Besetzung des Fahrzeugs repräsentieren, unter Nutzung einer durchschnittlichen Besetzung für jeden Fahrzeugtyp approximiert werden.

5. Verfahren nach Anspruch 3, wobei mindestens eines der Fahrzeuge ein öffentliches Verkehrsmittel ist und wobei der mit der Besetzung des Fahrzeugs assoziierte Sensor einen mit dem öffentlichen Verkehrsmittel assoziierten automatisierten Fahrgastzähler umfasst.

6. Verfahren nach Anspruch 1, wobei das Maschinenlernmodell ein gefaltetes neuronales Netz und verstärkendes Lernen umfasst, wobei das Maschinenlernmodell Q-Lernen durch iteratives Aktualisieren einer Q-Wert-Funktion umfasst und wobei die Bestimmung der einen oder der mehreren Verkehrsaktionen als die Verkehrsaktionen, die die höchsten Q-Werte aufweisen, bestimmt wird.

7. Verfahren nach Anspruch 6, wobei das Maschinenlernmodell genutzt wird, um eine Belohnungsfunktion durch Minimieren einer kumulativen Verzögerung der sich der Kreuzung nähernden Fahrzeuge zu optimieren, wobei die Belohnungsfunktion eine kumulative Verzögerung bei einer vorherigen Iteration minus einer kumulativen Verzögerung bei einer momentanen Iteration umfasst.

8. Verfahren nach Anspruch 7, wobei die kumulative Verzögerung als eine Summierung von Verzögerungen über jede mögliche Bewegung der Fahrzeuge bei jeder Annäherung an die Kreuzung bestimmt wird.

9. System (100) zur Verkehrssignalsteuerung für eine Kreuzung eines Verkehrsnetzes (150), wobei das Verkehrsnetz (150) einen oder mehrere Sensoren umfasst, wobei das System (100) einen oder mehrere Prozessoren (110) und einen Datenspeicher (104, 112, 116) umfasst, wobei der eine oder die mehreren Prozessoren (110) konfigurierbar sind, um Folgendes auszuführen:

ein Datenextraktionsmodul (122) für Folgendes:

Empfangen von Sensormesswerten von dem einen oder den mehreren Sensoren, wobei die Sensormesswerte eine Vielzahl physischer Eigenschaften, die mit sich der Kreuzung nähernden Fahrzeugen assoziiert sind, umfassen;

Diskretisieren der Sensormesswerte basierend auf einem Gitter von nur auf Abschnitte einer oder mehrerer Straßen projizierten Zellen, wobei die Abschnitte Bereiche, in denen sich Verkehr auf einer solchen oder solchen mehreren Straßen der Kreuzung nähert, umfassen;

für jede der Vielzahl physischer Eigenschaften Assoziieren, für jede der Zellen in dem Gitter von Zellen, eines jeweiligen Werts für die Zelle in dem Gitter von Zellen, der die physische Eigenschaft repräsentiert, die mit jedem der Fahrzeuge assoziiert ist, wenn die Fahrzeuge die Zelle mindestens zum Teil belegen, sonst Assoziieren eines Nullwerts für die Zelle; und

für jede der Vielzahl physischer Eigenschaften Generieren einer Matrix, die mit der physischen Eigenschaft assoziiert ist, umfassend eine Kombination des Gitters von auf die eine oder die mehreren Straßen projizierten Zellen mit den jeweiligen Werten für jede Zelle in dem Gitter von Zellen;

ein Maschinenlernmodul (124) zum Kombinieren jeder Matrix, die mit jeder der Vielzahl physischer Eigenschaften assoziiert ist, als separate Schichten in einer mehrschichtigen Matrix und zum Bestimmen einer oder mehrerer Verkehrsaktionen mit der mehrschichtigen Matrix als Eingabe unter Nutzung eines mit einem Verkehrssteuerungstrainingsdatensatz trainierten Maschinenlernmodells, wobei der Verkehrssteuerungstrainingsdatensatz zuvor bestimmte mehrschichtige Matrizen für eine Vielzahl von Verkehrsszenarien an der Kreuzung umfasst; und

ein Steuerungsmodul (120) zum Kommunizieren der einen oder der mehreren Aktionen an das Verkehrsnetz.

10. System nach Anspruch 9, wobei eine der physischen Eigenschaften die Geschwindigkeit der Fahrzeuge ist, eine andere der physischen Eigenschaften die Position der Fahrzeuge ist und noch eine andere der physischen Eigenschaften die Besetzung der Fahrzeuge ist.

11. System nach Anspruch 10, wobei Daten, die die Besetzung des Fahrzeugs repräsentieren, unter Nutzung einer durchschnittlichen Besetzung für jeden Fahrzeugtyp approximiert werden.

12. System nach Anspruch 10, wobei mindestens eines der Fahrzeuge ein öffentliches Verkehrsmittel ist und wobei der mit der Besetzung des Fahrzeugs assoziierte Sensor einen mit dem öffentlichen Verkehrsmittel assoziierten automatisierten Fahrgastzähler umfasst.

13. System nach Anspruch 9, wobei das Maschinenlernmodell ein gefaltetes neuronales Netz und verstärkendes Lernen umfasst, wobei das Maschinenlernmodell Q-Lernen durch iteratives Aktualisieren einer Q-Wert-Funktion umfasst und wobei die Bestimmung der einen oder der mehreren Verkehrsaktionen als die Verkehrsaktionen, die die höchsten Q-Werte aufweisen, bestimmt wird.

14. System nach Anspruch 13, wobei das Maschinenlernmodell genutzt wird, um eine Belohnungsfunktion durch Minimieren einer kumulativen Verzögerung der sich der Kreuzung nähernden Fahrzeuge zu optimieren, wobei die Belohnungsfunktion eine kumulative Verzögerung bei einer vorherigen Iteration minus einer kumulativen Verzögerung bei einer momentanen Iteration umfasst.

15. System nach Anspruch 14, wobei die kumulative Verzögerung als eine Summierung über mögliche Bewegungen von Verzögerungen über jede mögliche Bewegung der Fahrzeuge bei jeder Annäherung an die Kreuzung bestimmt wird.

**Revendications**

1. Procédé (300) de commande de feu de signalisation pour une intersection d'un réseau de circulation (150), le réseau de circulation (150) comprenant un ou plusieurs capteurs, le procédé (300) comprenant :

la réception (302) de lectures de capteur en provenance desdits un ou plusieurs capteurs, les lectures de capteur comprenant une pluralité de caractéristiques physiques associées à des véhicules s'approchant de l'intersection ;

la discrétisation (304) des lectures de capteur sur la base d'une grille de cellules projetées uniquement sur des segments d'une ou plusieurs rues, les segments comprenant des zones où la circulation dans lesdites une ou plusieurs rues s'approche de l'intersection ;

pour chacune de la pluralité de caractéristiques physiques, l'association (306), pour chacune des cellules de la grille de cellules, d'une valeur respective pour la cellule de la grille de cellules représentant la caractéristique physique associée à chacun des véhicules si les véhicules occupent au moins partiellement la cellule, sinon l'association d'une valeur nulle pour la cellule ;

pour chacune de la pluralité de caractéristiques physiques, la génération d'une matrice associée à la caractéristique physique comprenant une combinaison de la grille de cellules projetée sur lesdites une ou plusieurs rues avec les valeurs respectives pour chaque cellule de la grille de cellules ;

la combinaison (306) de chaque matrice associée à chacune de la pluralité de caractéristiques physiques comme couches séparées dans une matrice multicouche ;

la détermination (308), à l'aide d'un modèle d'apprentissage automatique entraîné avec un ensemble d'apprentissage de commande de circulation, d'une ou plusieurs actions de circulation avec la matrice multicouche comme entrée, l'ensemble d'apprentissage de commande de circulation comprenant des matrices multicouches préalablement déterminées pour une pluralité de scénarios de circulation au niveau de l'intersection ; et

la communication (310) desdites une ou plusieurs actions au réseau de circulation.

2. Procédé selon la revendication 1, dans lequel l'une des caractéristiques physiques est la vitesse des véhicules et une autre des caractéristiques physiques est la position des véhicules.

3. Procédé selon la revendication 1, dans lequel l'une des caractéristiques physiques est l'occupation des véhicules.

4. Procédé selon la revendication 3, dans lequel des données représentant l'occupation du véhicule sont déterminées approximativement à l'aide d'une occupation moyenne pour chaque type de véhicule.

5. Procédé selon la revendication 3, dans lequel au moins l'un des véhicules est un véhicule de transport en commun, et dans lequel le capteur associé à l'occupation du véhicule comprend un compteur automatique de passagers associé au véhicule de transport en commun.

6. Procédé selon la revendication 1, dans lequel le modèle d'apprentissage automatique comprend un réseau neuronal convolutionnel et l'apprentissage par renforcement et dans lequel le modèle d'apprentissage automatique comprend l'apprentissage Q par mise à jour itérative d'une fonction de valeur Q, et dans lequel la détermination desdites une ou plusieurs actions de circulation est déterminée comme étant les actions de circulation qui ont les valeurs Q les plus élevées.

7. Procédé selon la revendication 6, dans lequel le modèle d'apprentissage automatique est utilisé pour optimiser une fonction de récompense en minimisant le retard cumulé des véhicules s'approchant de l'intersection, la fonction de récompense comprenant le retard cumulé lors d'une itération précédente moins le retard cumulé lors d'une itération actuelle.

8. Procédé selon la revendication 7, dans lequel le retard cumulé est déterminé comme étant une sommation de retards sur chaque mouvement possible des véhicules chaque fois qu'ils s'approchent de l'intersection.

9. Système (100) de commande de feu de signalisation pour une intersection d'un réseau de circulation (150), le réseau de circulation (150) comprenant un ou plusieurs capteurs, le système (100) comprenant un ou plusieurs processeurs (110) et une unité de stockage de données (104, 112, 116), lesdits un ou plusieurs processeurs (110) pouvant être configurés pour exécuter :

un module d'extraction de données (122) destiné à :

recevoir des lectures de capteur en provenance desdits un ou plusieurs capteurs, les lectures de capteur comprenant une pluralité de caractéristiques physiques associées à des véhicules s'approchant de l'intersection ;

discrétiser les lectures de capteur sur la base d'une grille de cellules projetées uniquement sur des segments d'une ou plusieurs rues, les segments comprenant des zones où la circulation dans lesdites une ou plusieurs rues s'approche de l'intersection ;

pour chacune de la pluralité de caractéristiques physiques, associer, pour chacune des cellules de la grille de cellules, une valeur respective pour la cellule de la grille de cellules représentant la caractéristique physique associée à chacun des véhicules si les véhicules occupent au moins partiellement la cellule, sinon associer une valeur nulle pour la cellule ; et

pour chacune de la pluralité de caractéristiques physiques, générer une matrice associée à la caractéristique physique comprenant une combinaison de la grille de cellules projetée sur lesdites une ou plusieurs rues avec les valeurs respectives pour chaque cellule de la grille de cellules ;

un module d'apprentissage automatique (124) destiné à combiner chaque matrice associée à chacune de la pluralité de caractéristiques physiques comme couches séparées dans une matrice multicouche, et à déterminer, à l'aide d'un modèle d'apprentissage automatique entraîné avec un ensemble d'apprentissage de commande de circulation, une ou plusieurs actions de circulation avec la matrice multicouche comme entrée, l'ensemble d'apprentissage de commande de circulation comprenant des matrices multicouches préalablement déterminées pour une pluralité de scénarios de circulation au niveau de l'intersection ; et

un module de commande (120) pour communiquer lesdites une ou plusieurs actions au réseau de circulation.

10. Système selon la revendication 9, dans lequel l'une des caractéristiques physiques est la vitesse des véhicules, une autre des caractéristiques physiques est la position des véhicules, et une autre des caractéristiques physiques est l'occupation des véhicules.

11. Système selon la revendication 10, dans lequel les données représentant l'occupation du véhicule sont déterminées approximativement à l'aide d'une occupation moyenne pour chaque type de véhicule.

12. Système selon la revendication 10, dans lequel au moins l'un des véhicules est un véhicule de transport en commun, et dans lequel le capteur associé à l'occupation du véhicule comprend un compteur automatique de passagers associé au véhicule de transport en commun.

13. Système selon la revendication 9, dans lequel le modèle d'apprentissage automatique comprend un réseau neuronal convolutionnel et l'apprentissage par renforcement et dans lequel le modèle d'apprentissage automatique comprend l'apprentissage Q par mise à jour itérative d'une fonction de valeur Q, et dans lequel la détermination desdites une ou plusieurs actions de circulation est déterminée comme étant les actions de circulation qui ont les valeurs Q les plus élevées.

14. Système selon la revendication 13, dans lequel le modèle d'apprentissage automatique est utilisé pour optimiser une fonction de récompense en minimisant le retard cumulé des véhicules s'approchant de l'intersection, la fonction de récompense comprenant le retard cumulé lors d'une itération précédente moins le retard cumulé lors d'une itération actuelle.

15. Système selon la revendication 14, dans lequel le retard cumulé est déterminé comme étant une sommation sur les mouvements possibles de retards sur chaque mouvement possible des véhicules chaque fois qu'ils s'approchent de l'intersection.

System
100

114

CPU
110

RAM
104

User
Interface
106

Traffic
Network
Interface
108

Network
Interface
110

Non-Volatile
Storage
112

Controller
Module
120

Data
Extraction
Module
122

Machine
Learning
Module
124

Action
Module
126

Sensor

Traffic Light
Network
150

Database
116

FIG. 1

10

Internet
24

Local
Computing
Device
26

Server
32

FIG. 2

300

Receive sensor readings data
302

Discretize sensor readings data
304

Determine state and reward
306

Select one or more actions
308

Apply selected actions
310

FIG. 3

Deep NN

Input → CNN → FNN → RL → *Control Policy*

FIG. 4

## FIG. 5

FIG. 6

FIG. 7

## FIG. 8

FIG. 9

FIG. 10

$$m_{j,t+1} = m_{j,t} - q_{j,t}$$

$q_{j,t}$

## FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180096595 A1

- US 20160055744 A1

**Non-patent literature cited in the description**

- **L. XIAOYUAN.** *Deep reinforcement learning for traffic light control in vehicular network*